# EUROPÄISCHE PATENTSCHRIFT

(11) **EP 3 077 277 B1**
(45) Veröffentlichungstag und Bekanntmachung des Hinweises auf die Patenterteilung: **12.07.2017**
(21) Anmeldenummer: 14814788.7
(22) Anmeldetag: 04.12.2014
(51) Int. Cl.: B62D 29/00, B62D 33/04

(54) **KOFFERAUFBAU FÜR EIN NUTZFAHRZEUG**
BODY FOR A UTILITY VEHICLE WITH A MULTI-LAYER PANEL
CORPS DE BOÎTE POUR UN VÉHICULE UTILITAIRE AVEC UN PANNEAU MULTICOUCHE

(30) Priorität: 04.12.2013 EP 13195689
(43) Veröffentlichungstag der Anmeldung: 12.10.2016
(73) Patentinhaber: Schmitz Cargobull AG, 48341 Altenberge (DE)
(72) Erfinder: SCHLUMM, Michael, 48683 Ahaus (DE); BEELMANN, Reinhard, 45721 Haltern am See (DE); SCHMITZ, Peter, 48341 Altenberge (DE)
(74) Vertreter: Cohausz & Florack
(86) Internationale Anmeldenummer: PCT/EP2014/076612
(87) Internationale Veröffentlichungsnummer: WO 2015/082634

(56) Entgegenhaltungen:
- DE-A1-102005 022 868
- DE-U1-202007 014 441
- US-A1- 2008 174 147

## Beschreibung

Die Erfindung betrifft einen Kofferaufbau für ein Nutzfahrzeug, wie beispielsweise einem Lastkraftwagen, Anhänger oder Sattelauflieger für einen Sattelzug, wobei der Kofferaufbau wenigstens ein Flächenelement mit wenigstens einem Paneel aufweist, welches eine Kernlage, die aus einem geschäumten Kunststoff gebildet ist, eine formstabile Strukturlage und eine Zwischenlage umfasst, die mit ihrer einen Seite an die Kernlage und mit ihrer gegenüberliegenden Seite an die Strukturlage grenzt. Dabei ist eine stoffschlüssige Verbindung zwischen der Strukturlage und der ihr zugeordneten Seite der Zwischenlage einerseits und zwischen der Kernlage und der ihr zugeordneten Seite der Zwischenlage andererseits hergestellt.

Kofferaufbauten dieser Art kommen insbesondere bei Nutzfahrzeugen zum Einsatz, die für den Transport von temperaturempfindlichen Gütern auf öffentlichen Straßen vorgesehen sind. Dabei ist bei einem Kofferaufbaut im Gegensatz zu anderen Nutzfahrzeugaufbauten, wie etwa Planenaufbauten, ein Laderaum durch feste Flächenelemente umgrenzt, die die Seitenwände und das feste Dach des Kofferaufbaus bilden. Auf diese Weise wird beispielsweise das Eindringen von Feuchtigkeit in den Laderaum des Nutzfahrzeugs vermieden, weshalb die Kofferaufbauten der hier in Rede stehenden Art beispielsweise auch für den Trockentransport, d.h. den Transport feuchtigkeitsempfindlicher Güter, verwendet werden.

Typischerweise bestehen die Seitenwände und das Dach von Kofferaufbauten aus einem oder mehreren mehrlagigen, nach Art eines Sandwichs ausgebildeten Paneelen, die eine innere Kernschicht und jeweils eine Außenlage auf beiden Seiten der Kernschicht besitzen. Die Paneele können dabei in Rahmen oder desgleichen gehalten sein, die nach Art eines Skeletts die Grundstruktur des jeweiligen Kofferaufbaus bilden. Es ist jedoch auch bekannt, die Paneele so auszubilden, dass sie selbst für eine direkte Verbindung mit dem jeweils an sie angrenzend angeordneten Paneel geeignet sind.

Zur Verbesserung der thermischen Isolierwirkung der Paneele kann für ihre Kernlage ein geschäumter Kunststoff eingesetzt werden. Hierzu geeignete Kunststoffschäume weisen eine geringe Dichte und eine geringe thermische Leitfähigkeit auf, so dass durch entsprechend aufgebaute Paneele eine gute Isolierung des jeweils von dem Kofferaufbau umgrenzten Laderaums gegenüber der Umgebung erreicht wird. Die Außenlagen der Paneele sorgen dabei für die notwendige Stabilität und Steifigkeit der Paneele. Der Schaumstoff der Kernlage alleine kann dies aufgrund seiner mangelnden Festigkeit und mangelnden Formstabilität unter Krafteinwirkung in der Regel nicht bewerkstelligen. Eine weitere Funktion der Außenlagen besteht darin, die Kernlage vor einer Beschädigung durch von außen auf das Paneel einwirkende Kräfte zu schützen. Um dies zu ermöglichen, bestehen die Außenlagen bei bekannten Paneelen für Kofferaufbauten in der Regel aus festem Stahlblech ausreichender Dicke, das zur Optimierung seiner optischen Erscheinung an seiner freien Außenseite lackiert oder foliert sein kann.

Gleichzeitig wirkt die Außenhaut bei den bekannten Paneelen als Barriere, die ein Eindringen von Feuchtigkeit, beispielsweise durch Eindiffundieren von Dämpfen, insbesondere Wasserdampf, in das Paneel verhindert.

Es ist bereits versucht worden, an Stelle der üblicherweise verwendeten Blech-Außenlagen bei Paneelen der voranstehend erläuterten Art beispielsweise glasfaserverstärkte Kunststoffe für die Außenlage zu verwenden, um das Gewicht der Paneele zu verringern und ihre Formsteifigkeit zu erhöhen. Allerdings besteht bei solchen Paneelen das Problem, das ihre Herstellung nur mit vergrößertem Aufwand möglich ist.

Ein weiteres grundsätzliches Problem bei Paneelen für Kofferaufbauten der hier in Rede stehenden Art stellt die dauerhafte sichere Anbindung der aus Schaumstoff bestehenden Kernlage an die jeweiligen Außenlagen dar. Hier zeigt sich, dass nur durch zusätzliche Vorkehrungen, wie der Auftrag von Haftvermittlerschichten oder eine besondere Oberflächenaktivierung der jeweils mit dem Schaumstoff der Kernlage in Kontakt kommenden Flächen der Außenlage, eine so gute Anbindung der Kernlage an die jeweilige Außenlage erfolgt, dass ein Abplatzen oder Abpellen der Außenlage von der Kernlage auch unter den rauen Einsatzbedingungen, denen Kofferaufbauten der hier in Rede stehenden Art in der Praxis ausgesetzt sind, sicher vermieden wird.

In der DE 17 04 581 A1 ist zur Lösung dieses Problems ein Paneelaufbau für Nutzfahrzeuge vorgeschlagen worden, bei dem eine äußere Strukturlage über an sie angeschäumte Zwischenlagen an eine aus Schaumstoff bestehende Kernlage angebunden ist.
Ein anderes Beispiel für ein Isolierpaneel, das als mehrlagiger Verbund ausgebildet und speziell zur Verwendung in isolierten Nutzfahrzeuganhängern, Containern oder sonstigen isolierten Abteilen bestimmt ist, ist in der EP 1 667 890 B1 und in US2008/174147 beschrieben. Das Isolierpaneel umfasst mindestens zwei im Wesentlichen gasundurchlässige Deckplatten. Eine dieser Deckplatten ist im Gebrauch dem jeweils von dem Isolierpaneel gegenüber der Umgebung abzuschirmenden Raum zugeordnet und als formsteife Laminatplatte ausgebildet. Hierzu weist sie eine gasundurchlässige Barriereschicht, die beispielsweise durch eine dünne Aluminium- oder eine PET-Folie gebildet ist, und wenigstens eine coplanar zur Barriereschicht ausgerichtete Strukturpolymerharzschicht auf, die mit der Barriereschicht verbunden ist. Bei den für die Praxis vorgesehenen Ausführungen des bekannten Isolierpaneels sind jeweils zwei faserverstärkte Strukturpolymerharzschichten vorgesehen, zwischen denen die Barriereschicht angeordnet ist. Die Strukturpolymerharzschichten und die Barriereschicht sind stoffschlüssig zu einem festen Laminat miteinander verbunden. Die im Gebrauch der freien Umgebung zugeordnete andere Decklage des bekannten Isolierpaneels ist dagegen bei seinen für die Praxis vorgesehenen Ausführungen einlagig aus einem gasundurchlässigen dickeren Metallblech hergestellt, wie beispielsweise einem dickeren Aluminium- oder Stahlblech. Zwischen den Decklagen ist bei dem bekannten Isolierpaneel wie üblich eine isolierende Kernschicht angeordnet, die aus einem geschäumten Kunststoff besteht. Um eine dauerhafte Anbindung der Kernschicht an die äußeren Decklagen zu gewährleisten, stellen bei der als Laminatdeckplatte ausgebildeten Decklage die Fasern der der Kernlage zugeordneten faserverstärkten Strukturpolymerharzschicht eine Bindungsoberfläche für den Schaum der Kernlage bereit. Indem nach dem Anschäumen der Kernlage die Fasern der Strukturpolymerharzschicht in die Kernlage greifen, soll eine intensive formschlüssige Anbindung erreicht werden, die trotz ihrer schlechten Verklebbarkeit eine dauerhafte Verbindung zwischen dem Schaum der isolierenden Kernlage und der zugeordneten Strukturpolymerharzschicht der Decklage gewährleisten soll.

Vor dem Hintergrund des voranstehend erläuterten Standes der Technik bestand die Aufgabe der Erfindung darin, einen Kofferaufbau zu schaffen, der sich kostengünstig herstellen lässt und dabei eine optimale Kombination aus minimiertem Gewicht, hoher Festigkeit und Formsteifigkeit sowie hoher Isolierwirkung bietet.

Als Lösung dieser Aufgabe schlägt die Erfindung einen Kofferaufbau mit den in Anspruch 1 angegebenen Merkmalen vor.

Vorteilhafte Ausgestaltungen der Erfindung sind in den abhängigen Ansprüchen angegeben und werden wie der allgemeine Erfindungsgedanke nachfolgend im Einzelnen erläutert.

In Übereinstimmung mit dem eingangs erläuterten Stand der Technik weist ein erfindungsgemäßer Kofferaufbau für ein Nutzfahrzeug wenigstens ein Flächenelement mit wenigstens einem Paneel auf, welches eine Kernlage, die aus einem geschäumten Kunststoff gebildet ist, eine formstabile Strukturlage und eine Zwischenlage umfasst, die mit ihrer einen Seite an die Kernlage und mit ihrer gegenüberliegenden Seite an die Strukturlage grenzt. Die Flächenelemente eines erfindungsgemäßen Kofferaufbaus stellen typischerweise eine Seitenwand, eine Trennwand oder ein Dachelement dar, durch die der vom Kofferaufbau umgrenzte Laderaum gegenüber der Umgebung thermisch isolierend abgeschirmt ist.

Erfindungsgemäß besitzt nun die Zwischenlage eine Dicke, die höchstens gleich der Dicke der Strukturlage ist, und besteht aus einem Material, dessen Dichte höher ist als die Dichte der Kernlage, wobei die an die Kernlage grenzende Seite der Zwischenlage affin zum angrenzenden geschäumten Kunststoff der Kernlage und die an die Strukturlage grenzende Seite der Zwischenlage affin zum angrenzenden Werkstoff der Strukturlage ist und wobei eine stoffschlüssige Verbindung zwischen der Strukturlage und der ihr zugeordneten Seite der Zwischenlage einerseits und zwischen der Kernlage und der ihr zugeordneten Seite der Zwischenlage andererseits hergestellt ist.

Der Erfindung liegt somit der Gedanke zu Grunde, zwischen der geschäumten und mithin nur begrenzt festen Kernlage sowie der die Formsteifigkeit und mechanische Belastbarkeit auch eines erfindungsgemäßen Paneels gewährleistenden Strukturlage eine Zwischenlage anzuordnen, die nach Art eines doppelseitigen Klebebands eine gute Anbindung der Kernlage an die Strukturlage gewährleistet. Hierbei wirkt die Zwischenlage jedoch nicht notwendig als aktives Klebemittel, sondern stellt in erster Linie Haftflächen zur Verfügung, die so beschaffen sind, dass der Werkstoff der jeweils anliegenden anderen Lage des Paneels dort anbindet und eine dauerhaft sichere stoffschlüssige Verkopplung von Zwischenlage, Kernlage und Strukturlage erreicht ist. Mittels der Zwischenlage lassen sich somit Strukturlagen und Kernlagen miteinander dauerhaft sicher verbinden, die ohne ein derartiges Mittel nicht mit der notwendigen Zuverlässigkeit stoffschlüssig aneinander haften würden. Die Zwischenlage eröffnet auf diese Weise eine höhere Flexibilität und Freiheit bei der Auswahl der für die Strukturlage oder die verwendeten Werkstoffe.

Die Dicke der Zwischenlage eines erfindungsgemäß ausgebildeten Paneels ist dabei höchstens gleich, insbesondere aber kleiner als die Dicke der Strukturlage. Dies hat den Vorteil, dass bei gegebener Gesamtdicke des Paneels ein maximales Volumen insbesondere für die geschäumte Kernlage zur Verfügung steht. So ist die Gesamtdicke der erfindungsgemäß vorgesehenen Zwischenlage typischerweise auf maximal 1 mm begrenzt, wobei bei praxisgerechter Ausgestaltung die Gesamtdicke der Zwischenlage bis zu 400 µm, beispielsweise 15 - 350 µm, insbesondere mindestens 30 µm oder höchstens 250 µm oder mindestens 50 µm und höchstens 150 µm beträgt. Gleichzeitig besteht die erfindungsgemäß vorgesehene Zwischenlage aus einem Material, das eine höhere Dichte besitzt als der Kunststoffschaum, aus dem die Kernlage besteht. Hierdurch kann die Zwischenlage neben der Anbindung von Strukturlage und Kernlage weitere Funktionen übernehmen. So kann die Zwischenlage die aussteifende Wirkung der Strukturlage ergänzen und so zu einer maximal hohen Formsteifigkeit eines erfindungsgemäß vorgesehenen Paneels beitragen.

Alternativ oder ergänzend kann die Zwischenlage auch als Barriereschicht wirken, die ein Eindiffundieren von gasförmigen oder flüssigen Medien in die poröse und in der Regel saugfähige Kernlage verhindert. Diese für die Praxis besonders wichtige Ausgestaltung eröffnet zusätzliche Freiheiten bei der Auswahl des Materials der Kernlage und der Strukturlage. So können durch eine als Barriere wirkende Zwischenlage die für die Strukturlage verwendeten Materialien schwerpunktmäßig unter dem Gesichtspunkt maximaler Formstabilität, Beulsteifigkeit und desgleichen ausgewählt werden, während sich für die Kernlage kostengünstige offenporige Schaumstoffe verwenden lassen.

Damit die Zwischenlage eine Barriere gegenüber der Diffusion von Gasen, Dämpfen, wie insbesondere Wasserdampf, oder Flüssigkeiten in das Paneel hinein oder durch das Paneel hindurch bereitstellen kann, kann es zweckmäßig sei, in der Zwischenlage eine gesonderte Schicht vorzusehen, die diese Funktion erfüllt, während mindestens eine weitere Schicht vorhanden ist, die beispielsweise eine geforderte Festigkeit der Zwischenschicht bereitstellt oder die für die stoffschlüssige Anbindung an die jeweils angrenzende Lage erforderliche Affinität bereitstellt. Durch einen mehrschichtigen Aufbau der Zwischenschicht können also auch bei der Zwischenschicht unterschiedliche physikalische Eigenschaften bereitgestellt werden.

Die Makrostruktur der Zwischenlage kann ihrem jeweiligen Funktionszweck entsprechend gewählt werden. So ist es im Fall, dass eine ganzflächig durchgehende Anbindung der Kern- oder Strukturlage an die Zwischenlage gewünscht ist, zweckmäßig, die Zwischenlage als gleichmäßig geschlossene Schicht auszubilden. Dies ist selbstverständlich zumindest in den Bereichen des Paneels, in denen es zur Penetration durch gasförmige oder flüssige Medien kommen kann, auch dann angezeigt, wenn die Zwischenlage eine Barriere bilden soll, die die Kernlage gegen das Eindringen solcher Medien schützen soll. Es kann jedoch auch vorteilhaft sein, der Zwischenlage eine rauhe, gelochte, netzartige oder in anderer Weise räumlich gestaltete, Erhebungen, Einsenkungen, Löcher oder desgleichen aufweisende Struktur zu geben, um beispielsweise die erfindungsgemäß vorgesehene stoffschlüssige Anbindung der Strukturlage oder der Kernlage an die Zwischenlage durch eine form- oder kraftschlüssige Verkopplung zu unterstützen. Denkbar ist es zu diesem Zweck beispielsweise, dass die Zwischenlage ein flache Gewebe, ein Lochblech, eine poröse Schicht oder eine gelochte Folie oder desgleichen umfasst.

Die wenigstens eine Zwischenlage eines bei einem erfindungsgemäßen Kofferaufbau vorgesehenen Paneels umfasst zweckmäßigerweise mindestens eine aus einem Kunststoff, einem Metall, eine Metalllegierung, einem metallhaltigen Kunststoff oder einer metallisierten Kunststoff bestehende strukturbildende Schicht. Soll hierzu ein Kunststoff verwendet werden, so bieten sich dazu beispeilsweise Polypropylen (PP), biaxial orientiertes Polypropylen (BOPP) oder Polypropylenterephthalat (PET) an. Als Metall bzw. Metalllegierung eignen sich für die strukturbildende Schicht der erfindungsgemäß vorgesehenen Zwischenlage insbesondere Aluminium und seine Legierungen. Denkbar für diesen Zweck sind jedoch auch dünne Stahlbleche oder - folien, die unter Berücksichtigung ihrer Widerstandsfähigkeit gegen korrosive Angriffe ausgewählt werden. Im Fall, dass ein metallhaltiger Kunststoff für die strukturbildende Schicht der Zwischenlage eingesetzt werden soll, hat es sich als vorteilhaft herausgestellt, wenn die Metallpartikel der Kunststoffmatrix feindispers verteilt vorliegen, wobei sich eine optimale Wirkung einstellt, wenn die Metallpartikel als flache Plättchen vorliegen. Ebenso kann die strukturbildende Schicht der Zwischenlage als Kombination aus einer aus Kunststoff bestehenden Trägerschicht und einer darauf in geeigneter Weise applizierten, beispielsweise aufgewalzten oder durch Bedampfen aufgetragenen metallischen Schicht gebildet sein.

Die Dicke der jeweils strukturbildenden Schicht der Zwischenlage beträgt typischerweise 15 - 250 µm, insbesondere 30 - 150 µm oder 50 - 100 µm. Dies gilt auch dann, wenn die Zwischenlage alleine aus ihrer strukturbildenden Schicht besteht, also insbesondere keine Haftvermittlerschichten umfasst, wie sie weiter unten erläutert werden.

Den voranstehenden Erläuterungen entsprechend kann die Zwischenlage eine ein- oder mehrschichtigte dünne Blechlage, eine blattartige Folie, oder eine durch ein Auftragverfahren, wie Aufdampfen, Aufstreichen, Aufsprühen und desgleichen, auf die dann als Träger dienende Strukturlage oder Kernlage erzeugte Schicht umfassen. Entscheidend ist, dass die Zwischenlage unabhängig von der Art und Weise ihrer Applikation jeweils eine stoffschlüssige Anbindung zwischen ihr und der jeweils an sie angrenzenden Kern- bzw. Strukturlage gewährleistet.

Unter der hierzu erfindungsgemäß vorgesehenen jeweiligen Affinität der Zwischenlage zur jeweils zugeordneten Struktur- und Kernlage wird verstanden, dass einerseits die der Kernlage zugeordnete Seite der Zwischenlage so beschaffen ist, dass das Material der Kernlage mit der betreffenden Seite der Zwischenlage eine intensive stoffschlüssige Verbindung eingeht, und dass sich andererseits eine genauso großflächige und dauerhaft sichere stoffschlüssige Verbindung zwischen der Strukturlage und der ihr zugeordneten Seite der Zwischenlage einstellt.

Dabei sind im Sinne der Erfindung grundsätzlich solche Oberflächen zueinander affin, die die Ausbildung hoher Adhäsionskräfte, insbesondere eine stoffschlüssige Verbindung, wie etwa ein Anhaften oder Verkleben, mit der jeweils angrenzenden Lage (Struktur- oder Kernlage) ermöglichen.

Dementsprechend ist die Affinität der jeweiligen Seiten der Zwischenlage an die besonderen Eigenschaften und das Anhaftverhalten der jeweils zugeordneten Lage des Paneels angepasst. Dies bringt es mit sich, dass bei unterschiedlichen für die Kernlage und Strukturlage verwendeten Materialien und entsprechend unterschiedlicher Neigung dieser Materialien zum Anhaften an andere Materialien die Affinität der Strukturlage und der Kernlage zugeordneten Seiten der Zwischenlage ebenso unterschiedlich sein muss. Weisen die Strukturlage und die Kernlage dagegen ein gleiches Verhalten bei der Ausbildung von stoffschlüssigen Verbindungen auf, so können die Affinitäten der beiden Seiten der Zwischenlage zum Werkstoff der jeweils angrenzenden Lage dagegen selbstverständlich gleich sein.

Die erforderliche Affinität der Zwischenlage zum jeweils angrenzenden Werkstoff kann durch eine chemische oder physikalische oder mechanische Vorbehandlung der jeweiligen Seite der Zwischenlage hergestellt werden. Die wenigstens eine Seite kann also in entsprechender Weise ausgebildet oder vorbehandelt sein, dass die gewünschte Affinität bereitgestellt wird. Bedarfsweise kann die Zwischenlage so gewählt sein, dass diese bereits ohne besondere Ausgestaltung oder Vorbehandlung eine höhere Affinität zur Strukturlage als die Kernlage und/oder eine höhere Affinität zur Kernlage als die Strukturlage aufweist. Auf diese Weise können Strukturlagen und Kernlagen miteinander verbunden werden, die eine sehr geringe Affinität zueinander aufweisen. Besonders effektiv ist es in diesem Zusammenhang, wenn wenigstens eine Seite der Zwischenlage derart ausgebildet oder vorbehandelt ist, dass die gewünschte Affinität erreicht wird, die sich von der Affinität der gegenüberliegenden Seite der Zwischenlage unterscheidet. Somit können im Grenzbereich zwischen der Zwischenlage und der Kernlage einerseits sowie der Strukturlage andererseits hohe Bindungskräfte erreicht werden.

Insgesamt erlaubt es die erfindungsgemäß vorgesehene Zwischenlage bei einem für einen erfindungsgemäßen Kofferaufbau vorgesehenen Paneel Strukturlagen zu verwenden, deren physikalische Eigenschaften jedenfalls teilweise mit denen bisheriger Außenlagen von Paneelen eines Kofferaufbaus vergleichbar sind. Zudem kann über die Zwischenlage neben der Anbindung der Kernlage an die Strukturlage auch wenigstens eine weitere physikalische Eigenschaft des Paneels bereitgestellt werden, die bedarfsweise nicht eine Eigenschaft der Strukturlage sein muss.

Mit der Erfindung wird somit ein Kofferaufbau zur Verfügung gestellt, bei dem Flächenelemente mit mindestens einem mit geringem Aufwand hinsichtlich seiner Gebrauchseigenschaften optimierten Paneel zum Einsatz kommen, bei dem eine dauerhaft sichere Anbindung zwischen der Struktur- und Kernlage mittels der dazwischen angeordneten Zwischenlage gesichert ist.

Die aus Schaum bestehende Kernlage weist von den einzelnen Lagen eines erfindungsgemäß vorgesehenen Paneels bei weitem die größte Dicke auf. So liegen die Dicken der Kernlagen abhängig vom Grad der geforderten thermischen Solierung typischerweise im Bereich von 20 - 145 mm. Jedoch sind auch größere Dicken möglich, wenn sich hierzu aufgrund besonderer Anforderungen an die Isolierwirkung oder besonderer klimatischer Bedingungen, unter denen der Kofferaufbau zum Einsatz kommt, die Notwendigkeit ergibt. Bei einem erfindungsgemäßen Paneel kann die Kernlage an die jeweils vorhandene Zwischenlage angeschäumt sein. Aus fertigungstechnischer Sicht erweist es sich dabei als besonders vorteilhaft, wenn zunächst die Zwischenlage an der Strukturlage angebracht und dann die Kernlage an die Zwischenlage angeschäumt wird. Dies erweist sich als besonders günstig, wenn bei einem erfindungsgemäßen Paneel die Kernlage zwischen zwei mit Abstand zueinander angeordneten festen, den äußeren Abschluss des Paneels bildenden Lagen ausgebildet wird, zwischen die bei der Herstellung des Paneels der Schaum der Zwischenlage eingebracht wird. Die erfindungsgemäß mindestens auf der der Kernlage zugeordneten Seite mindestens einer der beiden den äußeren Abschluss bildenden Lagen vorgesehene Zwischenlage stellt dabei sicher, dass es beim Einschäumen der Kernlage zu einer stoffschlüssigen, dauerbeständigen Anbindung der betreffenden, durch die jeweilige Strukturlage des Paneels gebildeten äußeren Lage an die Kernlage kommt.

Eine besonders gute thermische Isolierwirkung der Kernlage kann dadurch erreicht werden, wenn die Kernlage aus einem Polyurethanschaum besteht. Derartige Schäume lassen sich besonders einfach an die jeweilige Zwischenlage anschäumen. Im Zuge des Aushärtens des so angeschäumten Kunststoffs an der Zwischenlage kommt es dann zum gewünschten Stoffschluss zwischen der Zwischenlage und der Kernlage.

Eine in der Praxis mit geringem Aufwand umsetzbare Ausgestaltung der Erfindung besteht darin, dass die Zwischenlage des mindestens einen bei einem erfindungsgemäßen Kofferaufbau vorhandenen Paneels ausschließlich stoffschlüssig mit der Strukturlage oder der Kernlage verbunden ist. Dies vereinfacht den Herstellungsprozess des jeweiligen Paneels.

Um die Kernlage oder die Strukturlage dauerhaft fest mit der Zwischenlage zu verbinden, kann es je nach Materialwahl vorteilhaft sein, wenn die Zwischenlage an ihrer an die Kernlage grenzenden Seite eine innere Haftvermittlerschicht aufweist, die für eine stoffschlüssige Anbindung der Kernlage an die Zwischenlage sorgt. Alternativ oder zusätzlich kann die Zwischenlage auch an ihrer an die Strukturlage grenzenden Seite eine äußere Haftvermittlerschicht besitzen, die für die stoffschlüssige Anbindung der Strukturlage an die Kernlage sorgt.

Die Dicke der Haftvermittlerschichten beträgt jeweils wenige Mikrometer, beispielsweise höchstens 10 µm oder sogar nur höchstens 5 µm. Genauso ist es jedoch auch denkbar, die jeweilige Seite der Zwischenlage durch ein physikalisches Verfahren, wie beispielsweise einer Plasmabehandlung oder desgleichen, in bekannter Weise so zu aktivieren, dass sie für ein Anhaften des Werkstoffs der jeweils zugeordneten Struktur- oder Kernlage vorbereitet ist.

Im Fall, dass ein gesonderter Haftvermittler auf der jeweiligen Seite der Zwischenlage vorgesehen ist, wirkt er typischerweise direkt an der Grenzfläche zwischen der Zwischenlage einerseits und der Kernlage oder der Strukturlage andererseits, so dass bereits kleine Mengen, d.h. insbesondere sehr dünne Schichtstärken, des jeweiligen Haftvermittlers ausreichen, um die erfindungsgemäß vorgesehene stoffschlüssige Verbindung herzustellen. Dies unterscheidet Haftvermittlerschichten grundsätzlich von deutlich dickeren Klebstoffschichten. Besonders günstig erweist es sich dabei, wenn der jeweilige Haftvermittler die Benetzbarkeit der Zwischenlage einerseits und der Kernlage oder Strukturlage andererseits bewirkt. Hierzu eignen sich Haftvermittler, die oberflächenaktiv sind.

Im Fall, dass ein Haftvermittler auf mindestens einer der Seiten der Zwischenschicht vorgesehen ist, kann dieser aus fertigungstechnischer Sicht besonders einfach als Lack aufgetragen werden.

Die zuvor beschriebene Anbindung der Kernlage über eine Zwischenlage an eine formstabile Strukturlage kann sowohl auf der zur Umgebung als auch der zum Laderaum weisenden Seite des Paneels genutzt werden. Daher sieht eine weitere Ausgestaltung der Erfindung vor, dass beiderseits der Kernlage jeweils eine Strukturlage über jeweils eine Zwischenlage in erfindungsgemäßer Weise an die Kernlage angebunden ist. Es ist dann beiderseits der Kernlage jeweils eine Zwischenlage vorgesehen, über die die stoffschlüssige Anbindung der Kernlage an die jeweilige Strukturlage erfolgt, so dass an beiden Seiten der Kernlage eine Zwischenlage auf ihrer inneren Seite an die Kernlage angrenzt, während die äußere Seite der Zwischenlage an die jeweils außen liegende Strukturlage angrenzt.

Die Funktion der Strukturlage besteht bei einem erfindungsgemäß vorgesehenen Paneel in erster Linie darin, eine ausreichende Formstabilität und Beständigkeit des Paneels gegen mechanische Belastungen bereitzustellen.

Erforderlichenfalls kann die Strukturlage weitere Funktionen und physikalische Eigenschaften aufweisen. Eine maximale Freiheit bei der Gestaltung und Optimierung der Strukturlage kann dabei dadurch eröffnet werden, dass auf ihrer zur Kernlage abgewandten Seite eine Decklage vorgesehen ist. Diese Decklage bildet dann den äußeren Abschluss des Paneels zur Umgebung oder zum Laderaum des Kofferaufbaus. Sie kann dementsprechend im Hinblick auf die äußere optische Wirkung des Paneels optimiert sein. Gleichzeitig kann auch die Decklage bestimmte Funktionen übernehmen. Beispielsweis kann auch die Decklage nach Art einer Barriere wirken, die das Eindringen von flüssigen oder gasförmigen Medien in das Paneel verhindert. Hierzu kann die jeweils vorhandene Decklage im Wesentlichen gasdicht oder dampfdicht sein.

Die Strukturlage ist bis zu 1 mm dick, typischerweise beträgt ihre Dicke 100 - 500 µm, insbesondere 200 - 400 µm, wobei die Dicke der Strukturlage mindestens gleich, regelmäßig jedoch größer ist als die Dicke der Zwischenlage, über die sie an die Kernlage angebunden ist.

Eine einfache Herstellung und ein einfacher Aufbau des Paneels können dadurch erreicht werden, dass die Decklage angrenzend an die Strukturlage vorgesehen wird, wobei auch hier eine stoffschlüssige Verbindung aus herstellungstechnischer Sicht vorteilhaft ist.

Die Decklage kann eine Eigenschaft aufweisen, die die Strukturlage nicht besitzt oder zur Anbindung mindestens einer weiteren Schicht besser geeignet sein, als dies bei der Strukturlage der Fall ist. Insbesondere kann die Decklage an ihrer von der Strukturlage abgewandten Seite eine glatte Oberfläche bereitstellen, die vom Betrachter als optisch einwandfrei erkannt wird und sich gleichzeitig besonders gut reinigen lässt oder zum Auftrag von Kennzeichnungen und desgleichen eignet.

Um die ihr zugedachten Funktionen zu erfüllen, kann die Decklage eine metallische Schicht, eine metallhaltige Kunststoffschicht, eine metallisierte Schicht, eine Lackschicht oder eine Kunststofffolie sein. Die Decklage kann hierzu aus einem Leichtmetallblech, insbesondere einem Aluminiumblech, gebildet sein. Im Fall der Verwendung eines metallhaltigen Kunststoffs für die Decklage kann er auch hier beispielsweise dispers verteilte Metallpartikel, die insbesondere als flache Plättchen vorliegen, aufweisen. Die Decklage kann darüber hinaus ebenfalls aus einer metallisierten Schicht bestehen oder eine solche Schicht umfassen, die etwa durch Bedampfen mit einem metallischen Material erzeugt worden sein kann.

Zur Bildung einer optisch ansprechenden und leicht zu reinigenden äußeren Schicht des Paneels kann die Decklage eine metallische Schicht umfassen, die eine Lackschicht oder eine Kunststofffolie tragen kann.

Sollen die Deckschicht oder die Zwischenlage als Barriere gegen das Ein- oder Durchdringen von Flüssigkeiten oder Dämpfen in oder durch das erfindungsgemäß vorgesehene Paneel wirken, so ist die betreffende Lage, wie voranstehend erläutert, entweder insgesamt entsprechend gas- und flüssigkeitsdicht oder umfasst zumindest eine Schicht von ausreichender Dichtigkeit. Die jeweils erforderliche Dichtheit wird dabei unter dem Gesichtspunkt der Atmosphäre bewertet, der das jeweilige Paneel in der Praxis ausgesetzt ist. Als gas- oder dampf- sowie flüssigkeitsdichte Barrieren werden insoweit beispielsweise solche Zwischen- oder Decklagen eingestuft, die die Diffusion von Gasen, wie Sauerstoff, Kohlendioxid oder Stickstoff, und/oder Dämpfen, wie Wasserdampf oder Penthangas, auf ein Minimum begrenzen. Die Barrierewirkung gilt dabei erforderlichenfalls nicht nur für ein Eindringen von gasförmigen oder flüssigen Medien in das jeweilige Paneel hinein, sondern auch für das Austreten von im jeweiligen Paneel enthalten Gasen aus dem betreffenden Paneel hinaus. So kann die Kernlage des jeweiligen Paneels mit einem die thermische Isolierung verbessernden Gas, beispielsweise Penthangas, beaufschlagt sein, das dort erhalten bleiben soll. Eine besonders gute Barrierewirkung zeigen Zwischen- oder Decklagen, die aus Aluminiumwerkstoff bestehen. Dies gilt schon dann, wenn der Aluminiumwerkstoff in Form einer dünnen blattartigen Folie als Zwischen- oder Decklage zum Einsatz kommt oder als Schicht einer solchen Zwischen- oder Decklage vorgesehen ist.

Um bei der Fertigung der Paneele von Kofferaufbauten für Nutzfahrzeuge möglichst von Gleichteilen zu profitieren sowie den Herstellungsprozess zu vereinfachen und bedarfsweise symmetrische Eigenschaften des Paneels bereitstellen zu können, bietet es sich an, wenn jeweils die Zwischenlagen, die Strukturlagen und die Decklagen auf beiden Seiten der Kernlage gleichartig ausgebildet sind. Unterschiede hinsichtlich der Materialzusammensetzungen oder Schichtdicken können hier bedarfsweise toleriert werden. Als besonders günstig erweist es sich hier jedoch, wenn die Zwischenlagen, die Strukturlagen oder die Decklagen jeweils gleichartig zueinander ausgebildet sind, wobei eine identische Ausbildung und damit eine in Bezug auf die Kernlage glatt symmetrische Anordnung der Strukturlagen, Zwischenlagen und der optional vorhandenen Decklagen erreicht ist.

Die Strukturlage kann beispielsweise aus einem Kunststoff, insbesondere einem Kunststoff bestehen, der durch eine entsprechende Ausrüstung mechanisch hoch belastbar ist. Hierzu eignen sich an sich bekannte faserverstärkte Kunststoffe, die neben einer hohen Festigkeit und Steifigkeit zugleich ein besonders geringes Gewicht besitzen.

Um maximale mechanische Eigenschaften bei gleichzeitig optimierter Formsteifigkeit der Strukturlage zu erzielen, kann die Strukturlage aus zwei oder mehr Schichten aufgebaut sein. Im Fall, dass für zwei dieser Schichten faserverstärkte Kunststoffe verwendet werden, kann es im Hinblick auf eine möglichst gleichmäßige Verteilung der Eigenschaften der Strukturlage zweckmäßig sein, wenn die Fasern der beiden faserverstärkten Kunststoffschichten jeweils eine Vorzugsrichtung aufweisen. Indem dann die Vorzugsrichtungen der beiden faserverstärkten Kunststoffschichten unterschiedlich, etwa senkrecht zueinander ausgerichtet werden, lässt sich eine weitere Steigerung der Festigkeit oder Steifigkeit der Strukturlage bei gleichzeitig weiter vergleichmäßigter Verteilung dieser Eigenschaften ohne Rücksicht darauf erzielen, mit welcher Ausrichtung das Paneel im jeweiligen Flächenelement eingebaut wird. Verwerfungen oder ein Verziehen der Strukturlage können dabei dadurch vermieden werden, dass bei der Strukturlage eines erfindungsgemäßen Paneels wenigstens drei faserverstärkte Kunststoffschichten vorgesehen sind, wobei die Vorzugsrichtungen der Fasern von wenigstens zwei dieser Schichten parallel zueinander und im Wesentlichen senkrecht zur Vorzugsrichtung der Fasern der wenigstens einen weiteren faserverstärkten Kunststoffschicht verlaufen. Strukturelle Vorteile lassen sich dabei dadurch erzielen, dass zwei faserverstärkte Kunststoffschichten mit im Wesentlichen parallelen Vorzugsrichtungen der Fasern zu beiden Seiten der weiteren faserverstärkten Kunststoffschicht angeordnet sind, deren Vorzugsrichtung der Fasern wenigstens etwa senkrecht zu den Vorzugsrichtungen der beiden anderen faserverstärkten Kunststoffschichten ausgerichtet ist. Sofern die Strukturlage mehrschichtig aufgebaut ist und alle Schichten der Strukturlage faserverstärkte Kunststoffschichten sind, wobei optional alle faserverstärkten Kunststoffschichten eine Vorzugsrichtung der entsprechenden Fasern aufweisen und die Vorzugsrichtungen der Fasern benachbarter Schichten jeweils unter einem Winkel, insbesondere senkrecht zueinander ausgerichtet sind, lässt sich ein Verbund herstellen, der eine maximale Belastbarkeit der so beschaffenen Strukturlage gewährleistet.

Alternativ oder zusätzlich zu faserverstärkten Kunststoffen kann die eine Strukturlage auch aus einem faserverstärkten Thermoplasten bestehen. Derartige Kunststoffe lassen sich besonders einfach in die jeweils für das Paneel vorgesehene Form bringen. Darüberhinaus stehen beispielsweise mit Polypropylen besonders kostengünstige Thermoplastkunststoffe zur Verfügung. Dabei kann auch der betreffende Thermoplastkunststoff wiederum faserverstärkt sein, um ihm eine maximale Festigkeit zu verleihen.

Die Erfindung wird nachfolgend anhand einer ein Ausführungsbeispiel darstellenden Zeichnung näher erläutert. In der Zeichnung zeigt
- Fig. 1: ein Nutzfahrzeug mit einem erfindungsgemäßen Kofferaufbau in einer perspektivischen Darstellung und
- Fig. 2: ein Paneel einer Seitenwand des in Fig. 1 dargestellten Kofferaufbaus in einer Schnittansicht quer zum Paneel.

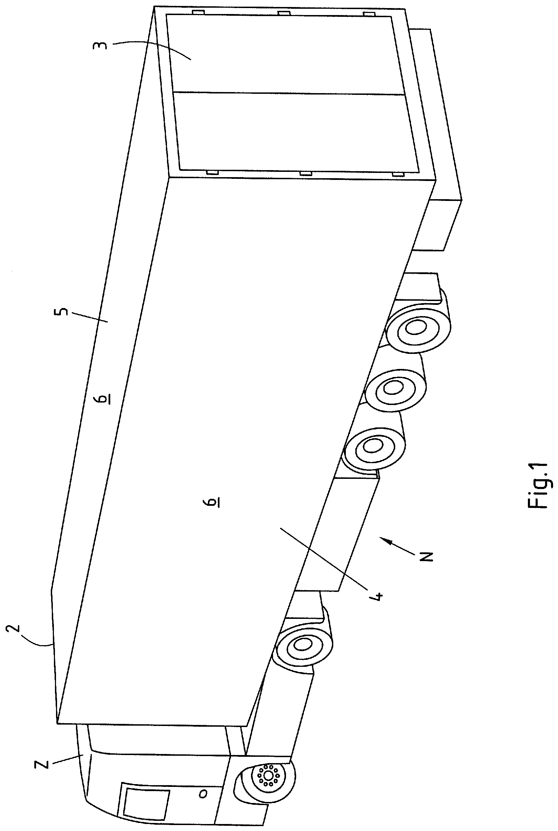

In der Fig. 1 ist ein Nutzfahrzeug N in Form eines Sattelaufliegers dargestellt, der von einer Zugmaschine Z gezogen wird. Das Nutzfahrzeug N trägt einen geschlossenen Kofferaufbau 1, der mit einer Stirnwand 2, einer Rückwand 3, zwei Seitenwänden 4 und einem Dach 5 einen Laderaum zur Aufnahme von temperaturempfindlichem Transportgut gegenüber der freien Umgebung des Kofferaufbaus 1 umgrenzt.

Bei dem Kofferaufbau 1 umfasst jede Seitenwand 4 und das Dach 5 Flächenelemente, die als mehrschichtiges Paneel 6 gebildet sind. Die Paneele 6 sind in an sich bekannter Weise in einem hier der Übersichtlichkeit halber nicht dargestellten Rahmen gehalten, der nach Art eines Skelets die Grundstruktur des Kofferaufbaus 1 bildet.

Beim Kofferaufbau 1 ist der Aufbau des Paneels 6 des Dachs 5 identisch mit dem Aufbau der Paneele 6 der Seitenwände 4.

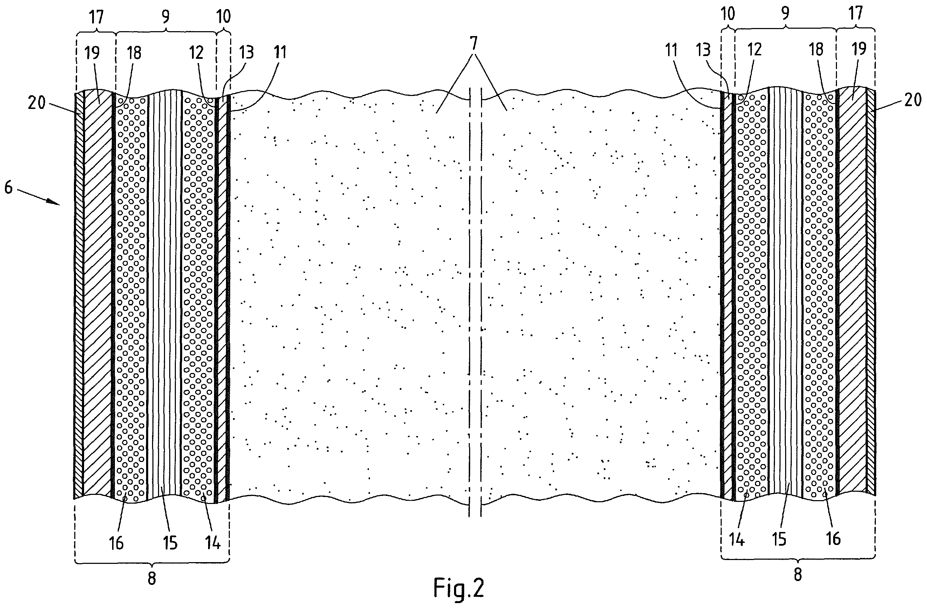

Der prinzipielle Aufbau der Paneele 6 des Dachs 5 und der Seitenwände 4 des Kofferaufbaus 1 aus Fig. 1 ist in der Fig. 2 dargestellt. Im Kernbereich des Paneels 6 weist dieses eine Kernlage 7 auf, die aus einem geschäumten Kunststoff mit einer geschlossenporigen Struktur besteht. Bei dem Kunststoffschaum der Kernlage 7 handelt es sich hier beispielsweise um geschäumtes Polyurethan. Die Kernlage 7 ist beispielsweise 10 cm dick.

Zu beiden Seiten der Kernlage 7 ist jeweils eine formstabile Außenhaut 8 vorgesehen.

Die formstabile Außenhaut 8 umfasst eine formstabile Strukturlage 9, die jeweils über eine Zwischenlage 10 stoffschlüssig mit der Kernlage 7 verbunden ist. Dazu weist jede Zwischenlage 10 an der an die Kernlage 7 angrenzenden Seite eine innere Haftvermittlerschicht 11 auf. An der an die Strukturlage 9 grenzenden Seite der jeweiligen Zwischenlage 10 ist eine äußere Haftvermittlerschicht 12 vorgesehen, um die stoffschlüssige Anbindung an die Strukturlage 9 zu bewerkstelligen.

Die strukturgebende Schicht der Zwischenlage 10 wird durch eine metallische Folie in Form einer Aluminiumfolie 13 bereitgestellt, die auf ihrer der Kernlage 7 zugeordneten Seite die innere Haftvermittlerschicht 11 und auf ihrer der Strukturlage 9 zugeordneten Seite die äußere Haftvermittlerschicht 12 trägt. Die Haftvermittlerschichten 11,12 sind jeweils als Lackschichten aufgebracht.

Dabei weist die Aluminiumschicht 13 typischerweise eine Dicke von 30 µm bis 100 µm auf, so dass die Gesamtdicke der aus den Haftvermittlerschichten 11,12 und der strukturgebenden Aluminiumfolie 13 der Zwischenlage 10 bei einer wenige Mikrometer starken Dicke der Haftvermittlerschichten 11,12 typischerweise bei >30 µm bis 150 µm oder 50 µm bis 110 µm liegt.

Unabhängig vom hier beschriebenen Ausführungsbeispiel werden in der Praxis für die strukturbildende Schicht der Zwischenlage 9 Schichtdicken von typischerweise 70 µm vorgesehen, so dass in diesem Fall die Gesamtdicke der Zwischenlage 10 unter Berücksichtigung von zwei auf die strukturbildende Schicht aufgetragenen und wenige µm dicken Haftvermittlerschichten im Bereich von >70 - 80 µm liegt. liegt.

Jedenfalls ist die Dicke der Zwischenlagen 10 jeweils drastisch kleiner als die Dicke der Kernlage 7 und ebenso deutlich geringer als die Dicke der Strukturlage 9.

Die Strukturlage 9 des Paneels 6 ist mehrschichtig aufgebaut und umfasst drei Schichten 14,15,16, die aus faserverstärktem Kunststoff bestehen. Jede dieser faserverstärkten Kunststoffschichten 14,15,16 ist etwa 100 µm bis 500 µm, insbesondere 200 µm bis 400 µm, dick. Die Fasern der faserverstärkten Kunststoffschichten 14,15,16 sind jeweils in einer Vorzugsrichtung ausgerichtet, wobei die Fasern bei der Strukturlage 9 in Form eines Geleges vorgesehen sind. Die Vorzugsrichtungen der Fasern der äußeren beiden faserverstärkten Kunststoffschichten 14,16 der jeweiligen Strukturlage 9 weisen eine identische Vorzugsrichtung auf. Die dazwischen vorgesehene faserverstärkte Kunststoffschicht 15 weist dagegen eine Vorzugsrichtung der Fasern auf, die senkrecht zu der Vorzugsrichtung der Fasern der angrenzenden aus faserverstärktem Kunststoff bestehenden Schichten 14,16 ausgerichtet sind. Die Vorzugsrichtungen der faserverstärkten Kunststoffschichten 14,15,16 sind jeweils parallel zur Ebene der jeweiligen Schicht 14,15,16 ausgerichtet.

Bei den Fasern der Schichten 14 - 16 der Strukturlage 9 handelt es sich beispielsweise um Glasfasern. Es könnten jedoch alternativ auch andere Fasern, wie beispielsweise Kunststofffasern, Basaltfasern, Kohlenstofffasern oder Graphitfasern als Verstärkung verwendet werden. Als der die Matrix der faserverstärkten Kunststoffschichten 14,15,16 bildende Kunststoff ist beispielsweise Polypropylen vorgesehen. Es können für diesen Zweck grundsätzlich jedoch nahezu alle thermoplastischen Kunststoffe Verwendung finden. Als geeignet hat sich hier beispielsweise auch Polyamid erwiesen.

An den der freien Umgebung des Kofferaufbaus 1 bzw. dem vom Kofferaufbau 1 umgrenzten Laderaum zugeordneten Außenseiten der beiden Strukturlagen 9 ist jeweils eine Decklage 17 vorgesehen, die über eine Haftvermittlerschicht 18 mit der Strukturlage 9 verbunden ist. Die Decklage 17 weist eine metallische Schicht 19 auf, die aus Aluminium besteht und etwa 100 µm bis 400 µm, insbesondere 200 µm bis 300 µm, dick ist. Auf der Außenseite der metallischen Schicht 19 ist eine Lackschicht 20 vorgesehen, die den jeweils äußeren Abschluss des Paneels 6 zum vom Kofferaufbau 1 umschlossenen Laderaum bzw. zur freien Umgebung des Kofferaufbaus 1 bilden. Alternativ oder ergänzend zur Lackschicht 20 könnte auch eine Folie oder ein Folienverbund vorgesehen sein.

Das Paneel 6 ist hinsichtlich der Kernlage 7, der Zwischenlagen 10, der Strukturlagen 9 und der Decklagen 17 im Wesentlichen symmetrisch aufgebaut, insbesondere spiegelsymmetrisch zu einer durch die Mittellage des Paneels 6 verlaufenden Symmetrieebene. Dabei sind die Dicken der einzelnen Schichten der beiden Außenhäute 8 des Paneels 6 gleich. Zudem sind die für die entsprechenden Lagen bzw. Schichten verwendeten Materialien gleich.

Im Zusammenhang mit dem in der Fig. 2 dargestellten und insoweit bevorzugten Aufbau eines Paneels 6 wird darauf hingewiesen, dass bei diesem einzelne Lagen oder Schichten bedarfsweise weggelassen oder bedarfsweise durch wenigstens eine andere Lage oder Schicht ersetzt werden können, ohne dass dies Auswirkungen auf den übrigen Aufbau des Paneels haben muss. Es sind also viele verschiedene alternative Ausführungsbeispiele denkbar, die in der speziellen Beschreibung der besseren Verständlichkeit und Übersichtlichkeit halber nicht als separate Ausführungsbeispiele separat dargestellt und beschrieben werden.

Hinsichtlich der zuvor verwendeten Begriffe "Lage" und "Schicht" wird darauf hingewiesen, dass eine "Lage" vorzugsweise ein separat bereitstellbares, herstellbares und/oder handhabbares Element des Paneels sein kann, während eine "Schichten" vorzugsweise nicht separat, sondern lediglich gemeinsam mit wenigstens einer weiteren Schicht als Lage gehandhabt und zur Herstellung des Paneels eingesetzt wird.

### BEZUGSZEICHEN

- N: Nutzfahrzeug
- Z: Zugmaschine
- 1: Kofferaufbau
- 2: Stirnwand des Kofferaufbaus 1
- 3: Rückwand des Kofferaufbaus 1
- 4: Seitenwände des Kofferaufbaus 1
- 5: Dach des Kofferaufbaus 1
- 6: Paneel
- 7: Kernlage des Paneels 6
- 8: Außenhäute des Paneels 6
- 9: Strukturlagen des Paneels 6
- 10: Zwischenlagen des Paneels 6
- 11: jeweilige innere Haftvermittlerschicht der Zwischenlagen 10
- 12: jeweilige äußere Haftvermittlerschicht der Zwischenlagen 10
- 13: Aluminiumfolie der Zwischenlagen 10
- 14-16: aus faserverstärktem Kunststoff bestehende Schichten der Strukturlagen 9
- 17: Decklagen
- 18: Haftvermittlerschichten
- 19: jeweilige metallische Schicht der Decklagen 17
- 20: Lackschichten

## Patentansprüche

1. Kofferaufbau für ein Nutzfahrzeug (N), wobei der Kofferaufbau (1) wenigstens ein Flächenelement mit wenigstens einem Paneel (6) aufweist, welches eine Kernlage (7), die aus einem geschäumten Kunststoff gebildet ist, eine formstabile Strukturlage (9) und eine Zwischenlage (10) umfasst, die mit ihrer einen Seite an die Kernlage (7) und mit ihrer gegenüberliegenden Seite an die Strukturlage (9) grenzt, wobei eine stoffschlüssige Verbindung zwischen der Strukturlage (9) und der ihr zugeordneten Seite der Zwischenlage (10) einerseits und zwischen der Kernlage (7) und der ihr zugeordneten Seite der Zwischenlage (10) andererseits hergestellt ist, **dadurch**
**gekennzeichnet, dass** die Zwischenlage (10) eine Dicke besitzt, die höchstens gleich der Dicke der Strukturlage ist, **dass** die Zwischenlage (10) aus einem Material besteht, dessen Dichte höher ist als die Dichte der Kernlage (7), **dass** die an die Kernlage (7) grenzende Seite der Zwischenlage (10) affin zum angrenzenden geschäumten Kunststoff der Kernlage (7) ist und **dass** die an die Strukturlage (9) grenzende Seite der Zwischenlage (10) affin zum angrenzenden Werkstoff der Strukturlage (9) ist.

2. Kofferaufbau nach Anspruch 1, **dadurch gekennzeichnet, dass** die Zwischenlage (10) ausschließlich stoffschlüssig mit der Strukturlage (9) oder Kernlage (7) verbunden ist.

3. Kofferaufbau nach einem der voranstehenden Ansprüche, **dadurch gekennzeichnet, dass** die Zwischenlage (10) auf ihrer an die Kernlage (7) grenzenden Seite eine innere Haftvermittlerschicht (11) trägt, die die stoffschlüssige Anbindung der Kernlage (7) an die Zwischenlage (10) gewährleistet, oder **dass** die Zwischenlage (10) auf ihrer an die Strukturlage (9) grenzenden Seite eine äußere Haftvermittlerschicht (12) trägt, die die stoffschlüssige Anbindung der Zwischenlage (10) an die Strukturlage (9) gewährleistet.

4. Kofferaufbau nach Anspruch 3, **dadurch gekennzeichnet, dass** die innere oder äußere Haftvermittlerschicht (11,12) als Lack aufgetragen sind.

5. Kofferaufbau nach einem der voranstehenden Ansprüche, **dadurch gekennzeichnet, dass** die wenigstens eine Zwischenlage (10) aus Kunststoff, Metall, einem metallhaltigen Kunststoff oder einer metallisierten Kunststoffschicht besteht.

6. Kofferaufbau nach einem der voranstehenden Ansprüche, **dadurch gekennzeichnet, dass** beidseits der Kernlage (7) jeweils eine Strukturlage (9) und jeweils zwischen der Kernlage (7) und der jeweiligen Strukturlage (9) eine Zwischenlage (10) angeordnet ist, die gemäß einem der voranstehenden Ansprüche ausgebildet ist.

7. Kofferaufbau nach einem der voranstehenden Ansprüche, **dadurch gekennzeichnet, dass** die Kernlage (7) an die jeweils vorhandene Zwischenlage (10) angeschäumt ist.

8. Kofferaufbau nach einem der voranstehenden Ansprüche, **dadurch gekennzeichnet, dass** auf der der Kernlage (7) abgewandten Seite der jeweils vorhandenen Strukturlage (9) eine Decklage (17) vorgesehen ist.

9. Kofferaufbau nach Anspruch 8,
**dadurch gekennzeichnet, dass** die Decklage (17) eine metallische Schicht (19), eine metallhaltige Kunststoffschicht, eine metallisierte Schicht, eine Lackschicht (20) oder eine Kunststofffolie ist.

10. Kofferaufbau nach Anspruch 8 oder 9,
**dadurch gekennzeichnet, dass** die jeweils vorhandenen Zwischenlagen (10), Strukturlagen (9) oder Decklagen (17) auf beiden Seiten der Kernlage (7) gleichartig zueinander ausgebildet sind.

11. Kofferaufbau nach einem der voranstehenden Ansprüche, **dadurch gekennzeichnet, dass** die jeweils vorhandene Zwischenlage (10) oder die jeweils vorhandene Decklage (17) im Wesentlichen gasdicht oder dampfdicht sind.

12. Kofferaufbau nach einem der voranstehenden Ansprüche, **dadurch gekennzeichnet, dass** die wenigstens eine Strukturlage (9) aus Kunststoff besteht.

13. Kofferaufbau nach einem der voranstehenden Ansprüche, **dadurch gekennzeichnet, dass** die wenigstens eine Strukturlage (9) mehrere Schichten (14,15,16) umfasst.

14. Kofferaufbau nach Anspruch 13, **dadurch gekennzeichnet, dass** die Schichten (14,15,16) aus einem faserverstärkten Kunststoff gebildet sind, **dass** die Fasern von wenigstens zwei faserverstärkten Kunststoffschichten (14,15,16) in einer Vorzugsrichtung ausgerichtet sind und **dass** die Vorzugsrichtungen der Fasern der beiden faserverstärkten Kunststoffschichten (14,15,16) senkrecht zueinander ausgerichtet sind.

15. Kofferaufbau nach einem der voranstehenden Ansprüche, **dadurch gekennzeichnet, dass** die wenigstens eine Zwischenlage (10) wenigstens aus einer Leichtmetallfolie, die wenigstens eine Strukturlage (9) aus faserverstärktem Polypropylen oder die eine Decklage (17) aus einem Leichtmetallblech bestehen.

## Claims

1. Box body for a commercial vehicle (N), wherein the box body (1) has at least one surface element having at least one panel (6), which comprises a core layer (7), formed from a foamed plastic, a dimensionally stable structural layer (9) and an intermediate layer (10), the one side thereof being adjacent to the core layer (7) and the opposite side being adjacent to the structural layer (9), wherein an integrally joined connection is produced between the structural layer (9) and the side of the intermediate layer (10) associated with it on the one hand and between the core layer (7) and the side of the intermediate layer (10) associated with it on the other hand, **characterised in that** the intermediate layer (10) has a thickness, which is at most the same as the thickness of the structural layer, that the intermediate layer (10) comprises a material, the density of which is greater than the density of the core layer (7), that the side of the intermediate layer (10) adjacent to the core layer (7) has an affinity to the adjacent foamed plastic of the core layer (7) and that the side of the intermediate layer (10) adjacent to the structural layer (9) has an affinity to the adjacent material of the structural layer (9).

2. Box body according to claim 1, **characterised in that** the intermediate layer (10) is bonded exclusively by an integrally joined connection with the structural layer (9) or core layer (7).

3. Box body according to one of the above claims, **characterised in that** the intermediate layer (10) on its side adjacent to the core layer (7) has an inner bonding agent ply (11), which guarantees the integrally joined connection of the core layer (7) to the intermediate layer (10), or **in that** the intermediate layer (10) on its side adjacent to the structural layer (9) has an outer bonding agent ply (12), which guarantees the integrally joined connection of the intermediate layer (10) to the structural layer (9).

4. Box body according to claim 3, **characterised in that** the inner or outer bonding agent ply (11, 12) is applied as a lacquer.

5. Box body according to one of the above claims, **characterised in that** the at least one intermediate layer (10) comprises, metal, a metal-containing plastic or a metallised plastic ply.

6. Box body according to one of the above claims, **characterised in that** on both sides of the core layer (7) in each case a structural layer (9) and in each case between the core layer (7) and the respective structural layer (9) an intermediate layer (10) is disposed, with a design according to one of the above claims.

7. Box body according to one of the above claims, **characterised in that** the core layer (7) is foamed onto the respective existing intermediate layer (10).

8. Box body according to one of the above claims, **characterised in that** on the side of the respectively present structural layer (9) turned away from the core layer (7) a top layer (17) is provided.

9. Box body according to claim 8, **characterised in that** the top layer (17) is a metallic ply (19), a metal-containing plastic ply, a metallised ply, a lacquer ply (20) or a plastic film.

10. Box body according to claim 8 or 9, **characterised in that** the respectively present intermediate layers (10), structural layers (9) or top layers (17) present have an identical structure to one another on both sides of the core layer (7).

11. Box body according to one of the above claims, **characterised in that** the respectively present intermediate layer (10) or the respectively present top layer (17) are substantially gas impermeable or vapour impermeable.

12. Box body according to one of the above claims, **characterised in that** the at least one structural layer (9) consists of plastic.

13. Box body according to one of the above claims, **characterised in that** the at least one structural layer (9) comprises several plies (14, 15, 16).

14. Box body according to claim 13, **characterised in that** the plies (14,15,16) are formed from a fibre-reinforced plastic, the fibres of at least two fibre-reinforced plastic plies (14, 15, 16) are aligned in a preferred direction and that the preferred directions of the fibres of the two fibre-reinforced plastic plies (14, 15, 16) are aligned perpendicularly to one another.

15. Box body according to one of the above claims, **characterised in that** the at least one intermediate layer (10) consists of at least one structural layer (9) in fibre-reinforced polypropylene or a top layer (17) in light sheet metal.

## Revendications

1. Coffre destiné à un véhicule utilitaire (N), auquel cas le coffre (1) présente au moins un élément de surface pourvu d'au moins un panneau (6), lequel comporte une couche intérieure (7), formée à partir d'une matière plastique alvéolaire, une couche structurelle (9) de forme stable et une couche intermédiaire (10) qui est adjacente par un de ses côtés à la couche intérieure (7) et par son côté opposé à la couche structurelle (9), auquel cas une liaison de matière est réalisée entre la couche structurelle (9) et le côté de la couche intermédiaire (10) qui lui est associé d'une part et entre la couche intérieure (7) et le côté de la couche intermédiaire (10) qui lui est associé d'autre part, **caractérisé en ce que** la couche intermédiaire (10) a une épaisseur qui est tout au plus égale à l'épaisseur de la couche structurelle, **en ce que** la couche intermédiaire (10) est constituée d'une matière dont la densité est supérieure à la densité de la couche intérieure (7), **en ce que** le côté de la couche intermédiaire (10), adjacent à la couche intérieure (7), présente une affinité vis-à-vis de la matière plastique alvéolaire de la couche intérieure (7) et **en ce que** le côté de la couche intermédiaire (10), adjacent à la couche structurelle (9), présente une affinité vis-à-vis de la matière de la couche structurelle (9).

2. Coffre selon la revendication 1, **caractérisé en ce que** la couche intermédiaire (10) est reliée exclusivement par liaison de matière avec la couche structurelle (9) ou la couche intérieure (7).

3. Coffre selon une des revendications précédentes, **caractérisé en ce que** la couche intermédiaire (10) porte sur son côté adjacent à la couche intérieure (7) une couche intérieure favorisant l'adhérence (11) qui assure la connexion par liaison de matière de la couche intérieure (7) sur la couche intermédiaire (10), ou **en ce que** la couche intermédiaire (10) porte sur son côté adjacent à la couche structurelle (9) une couche extérieure favorisant l'adhérence (12) qui assure la connexion par liaison de matière de la couche intermédiaire (10) sur la couche structurelle (9).

4. Coffre selon la revendication 3, **caractérisé en ce que** la couche intérieure ou extérieure favorisant l'adhérence (11, 12) est appliquée en tant que laque.

5. Coffre selon une des revendications précédentes, **caractérisé en ce que** la au moins une couche intermédiaire (10) se compose de matière synthétique, de métal, d'une matière synthétique comprenant du métal ou d'une couche de film plastique métallisé.

6. Coffre selon une des revendications précédentes, **caractérisé en ce que** des deux côtés de la couche intérieure (7) sont agencées respectivement une couche structurelle (9) et respectivement une couche intermédiaire (10), entre la couche intérieure (7) et la couche structurelle respective (9), qui est conçue conformément à une des revendications précédentes.

7. Coffre selon une des revendications précédentes, **caractérisé en ce que** la couche intérieure (7) est pressée par moussage sur la couche intermédiaire (10) respectivement disponible.

8. Coffre selon une des revendications précédentes, **caractérisé en ce que** l'on prévoit une couche de revêtement (17) sur le côté opposé à la couche intérieure (7) de la couche structurelle (9) respectivement disponible.

9. Coffre selon la revendication 8, **caractérisé en ce que** la couche de revêtement (17) est une couche métallique (19), une couche en matière synthétique comprenant du métal, une couche métallique, une couche de vernis (20) ou une feuille en matière synthétique.

10. Coffre selon la revendication 8 ou 9, **caractérisé en ce que** les couches intermédiaires (10), les couches structurelles (9) ou les couches de revêtement (17) respectivement disponibles des deux côtés de la couche intérieure (7) sont conçues similairement les unes par rapport aux autres.

11. Coffre selon une des revendications précédentes, **caractérisé en ce que** la couche intermédiaire (10) respectivement disponible ou la couche de revêtement (17) respectivement disponible sont essentiellement étanches aux gaz ou à la vapeur.

12. Coffre selon une des revendications précédentes, **caractérisé en ce que** la au moins une couche structurelle (9) se compose de matière synthétique.

13. Coffre selon une des revendications précédentes, **caractérisé en ce que** la au moins une couche structurelle (9) comporte plusieurs couches (14, 15, 16).

14. Coffre selon la revendication 13, **caractérisé en ce que** les couches (14, 15, 16) sont formées à partir d'une matière synthétique renforcée par des fibres, **en ce que** les fibres d'au moins deux couches en matière synthétique renforcées par des fibres (14, 15, 16) sont dirigées dans une direction préférentielle et **en ce que** les directions préférentielles des fibres des deux couches en matière synthétique renforcées par des fibres (14, 15, 16) sont dirigées perpendiculairement les unes par rapport aux autres.

15. Coffre selon une des revendications précédentes, **caractérisé en ce que** la au moins une couche intermédiaire (10) se compose au moins à partir d'une feuille en métal léger qui est constituée au moins d'une couche structurelle (9) à base de polypropylène renforcé par des fibres ou d'une couche de revêtement (17) à base d'une tôle en métal léger.
